# EUROPEAN PATENT SPECIFICATION

(11) **EP 2 846 564 B1**
(45) Date of publication and mention of the grant of the patent: **17.08.2016**
(21) Application number: 13830656.8
(22) Date of filing: 21.08.2013
(51) Int. Cl.: H04W 4/14, H04L 12/58

(54) **METHOD AND DEVICE FOR DISPLAYING MESSAGES**
VERFAHREN UND VORRICHTUNG ZUR ANZEIGE VON NACHRICHTEN
PROCÉDÉ ET DISPOSITIF D'AFFICHAGE DE MESSAGES

(30) Priority: 22.08.2012 CN 201210301140
(43) Date of publication of application: 11.03.2015
(73) Proprietor: Xiaomi Inc., Beijing 100085 (CN)
(72) Inventor: CHEN, Yinli, Beijing 100085 (CN); LIU, Xinyu, Beijing 100085 (CN); ZENG, Jian, Beijing 100085 (CN)
(74) Representative: Hanna, Peter William Derek
(86) International application number: PCT/CN2013/081974
(87) International publication number: WO 2014/029336

(56) References cited:
- WO-A2-2006/083820
- CN-A- 1 859 486
- CN-A- 101 365 194
- CN-A- 102 497 328
- CN-A- 102 833 408
- US-A1- 2004 015 547
- US-A1- 2009 177 981

## Description

### TECHNICAL FIELD

The present disclosure generally relates to the field of information, and more particularly, to a method and a device for displaying a message.

### BACKGROUND

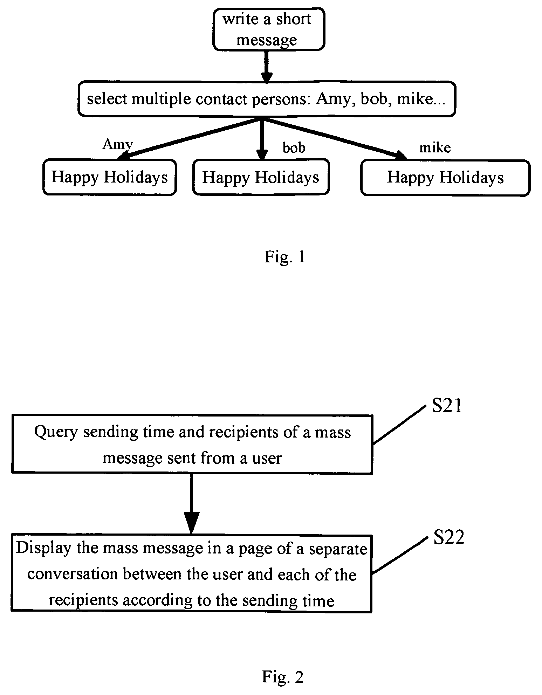

As standard applications of cell phones, messages are important tools for people to make friendly contacts and deliver information, and mainly include one-to-one messages and one-way mass messages. For the one-to-one messages, currently, many smartphones use a page of a separate conversation to display short messages sent from and received by the phone-user, that is to say, the page of the separate conversation includes correspondence messages between the phone-user and a contact person (a cellphone number). For the one-way mass messages, as shown in Fig. 1, the phone-user sends a message to multiple contact persons at a time; for the display manners of the one-way mass messages, one manner is to group the mass message sent at a time together to be displayed to the phone-user as a piece of message, and another manner is to list the mass message for each recipient.

Conventional solutions for displaying messages have obvious shortcomings: when the messages are displayed, the separate conversations between the user and the contact persons are independent from the mass messages. For example, if the user sends a mass message, and recipients of the mass message reply to the mass message, then the replied message is displayed in the page of the separate conversation between the user and the contact person, which causes incoherence in context and brings inconvenience to the user.

The present state of the art is represented by US 2009/177981 A1.

### SUMMARY

In view of the above, an object of the present disclosure is to provide a method and a device for displaying a message, in accordance with claims which follow, which can associate a mass message with a separate conversation.

In order to achieve the above object, the present disclosure provides a method for displaying a message, including:
querying sending time and recipients of a mass message sent from a user; and
displaying the mass message in a page of a separate conversation between the user and each of the recipients according to the sending time.

This solution inserts the mass message into the page of the separate conversation between the user and each of the recipients according to the sending time of the mass message, thus the mass message is associated with the separate conversation, such that the user may see the mass message in a page of a separate conversation between the user and a contact person, which provides convenience for the user to view the message and improves user experience.

As a preferred embodiment of the above technical solution, the step of displaying the mass message in the page of the separate conversation between the user and each of the recipients according to the sending time includes:
determining, for each of the recipients, whether a separate conversation between the user and the recipient exists; if the separate conversation between the user and the recipient exists, displaying the mass message in a page of the separate conversation between the user and the recipient according to the sending time. This solution avoids generating redundant conversations.

As a preferred embodiment of the above technical solution, the mass message is displayed in the page of the separate conversation between the user and the recipient through a link reference. This solution avoids information redundancy and saves space.

As a preferred embodiment of the above technical solution, the method further includes:
displaying a status of the mass message in the page of the separate conversation between the user and the recipient. This solution provides convenience for the user.

As a preferred embodiment of the above technical solution, the status of the mass message includes "sending", "sent", "read" or "sending failed".

As a preferred embodiment of the above technical solution, the method further includes:
highlighting the mass message in the page of the separate conversation between the user and the recipient. This solution may prevent a misoperation.

There is also provided a method for displaying a message, which includes the following steps:
querying sending time and recipients of a mass message sent from a user; and
querying messages received by the user according to the sending time and the recipients, and displaying, in a page of conversation of the mass message, messages replied to the user for the first time by each of the recipients after the sending time in the received messages.

This solution displays the messages replied by the recipients of the mass message in the page of conversation of the mass message, thereby the solution may also realize associating the mass message with separate conversations.

Correspondingly, the present disclosure also provides a device for displaying a message, including:
a first querying module configured to query sending time and recipients of a mass message sent from a user; and
a first processing module configured to display the mass message in a page of a separate conversation between the user and each of the recipients according to the sending time.

As a preferred embodiment of the above technical solution, the first processing module is further configured to determine, for each of the recipients, whether a separate conversation between the user and the recipient exists; if the separate conversation between the user and the recipient exists, to display the mass message in a page of the separate conversation between the user and the recipient according to the sending time.

As a preferred embodiment of the above technical solution, the first processing module is configured to display the mass message in the page of the separate conversation between the user and the recipient through a link reference.

As a preferred embodiment of the above technical solution, the first processing module is further configured to display a status of the mass message in the page of the separate conversation between the user and the recipient.

As a preferred embodiment of the above technical solution, the status of the mass message includes "sending", "sent", "read" or "sending failed".

As a preferred embodiment of the above technical solution, the first processing module is further configured to highlight the mass message in the page of the separate conversation between the user and the recipient.

The present disclosure also provides another device for displaying a message, including:
a second querying module configured to query sending time and recipients of a mass message sent from a user; and
a second processing module configured to query messages received by the user according to the sending time and the recipients, and display, in a page of conversation of the mass message, messages replied to the user for the first time by each of the recipients after the sending time in the received messages.

The present disclosure also provides a computer program which, when being executed on a processor of a device, performs any one of the above methods.

As can be seen from the above technical solutions, in the present disclosure, the mass message is inserted into a conversation of a single contact person according to the recipients and the sending time of the mass message, or reply messages of the mass message are displayed in a page of conversation of the mass message, thus the mass message is associated with the separate conversations, such that the user may see in the separate conversations the mass message that is displayed at an accurate location, which provides convenience for the user to view the message and improves user experience.

Other features and advantages of the present invention will be explained in the following description, and part of which will become obvious from the description, or may be understood by carrying out the present invention. Purposes and other advantages of the present invention may be achieved and obtained by structures particularly pointed out in the written description, claims and the accompanying drawings.

Hereinafter, the technical solutions of the present invention are further described in detail with reference to the accompanying drawings and embodiments.

### BRIEF DESCRIPTION OF THE DRAWINGS

The accompanying drawings are included to provide a further understanding of the present invention and constitute a part of this specification, and serve to explain the present invention together with the embodiments of the present invention, which do not limit the present invention. In the drawings:
Fig. 1 is a diagram illustrating a mass message in the prior art.
Fig. 2 is a flowchart showing a preferred embodiment of a method for displaying a message provided by an embodiment of the present invention.
Fig. 3 is a flowchart showing a specific embodiment of a method for displaying a message provided by an embodiment of the present invention.
Fig. 4 is a diagram illustrating a short message list after a method for displaying a message of the present invention is carried out.
Fig. 5 is a diagram illustrating a page of a separate conversation between a user and a recipient after the present invention is carried out.
Fig. 6 is a flowchart showing a preferred embodiment of another method for displaying a message provided by an embodiment of the present invention.
Fig. 7 is a structure diagram illustrating a preferred embodiment of a device for displaying a message provided by an embodiment of the present invention.
Fig. 8 is a structure diagram illustrating a preferred embodiment of another device for displaying a message provided by an embodiment of the present invention.

### DETAILED DESCRIPTION

Hereinafter, preferred embodiments of the present invention will be described with reference to the accompanying drawings. It should be understood that the preferred embodiments described herein are used merely to illustrate and explain rather than to limit the present invention.

Fig. 2 shows a specific embodiment of a method for displaying a message provided by the present invention. The method includes the following steps.

In step S21, sending time and recipients of a mass message sent from a user are queried.

In step S22, the mass message is displayed in a page of a separate conversation between the user and each of the recipients according to the sending time.

This solution inserts the mass message into the page of the separate conversation between the user and each of the recipients according to the sending time of the mass message, thus the mass message is associated with the separate conversation, such that the user may see the mass message in a page of a separate conversation between the user and a contact person, which provides convenience for the user to view the message and improves user experience.

When the specific embodiment is being carried out, there may be such a case that the user sends a mass message to 50 contact persons, then the mass message will be divided into short messages for each of the contact persons so as to be inserted into a separate conversation between the user and each of the contact persons. For example, the 50 contact persons include A, but a separate conversation between the user and A does not exist in the cellphone, so at this time, a separate conversation will be newly established for A, and then the mass message will be displayed in the newly established separate conversation. Under extreme situations, if the mass message of the user includes a lot of contact persons who are not often contacted (for example, mass messages containing blessings during Spring Festival), a great number of separate conversations that only include a piece of mass message will probably occur in the short message list, that is, redundant conversations are generated.

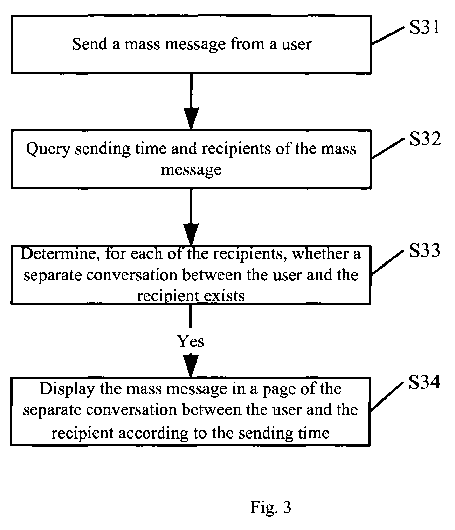

Fig. 3 shows another specific embodiment of a method for displaying a message provided by the present invention. The method includes the following steps.

In step S31, a mass message is sent from a user.

In step S32, sending time and recipients of the mass message are queried.

In step S33, it is determined, for each of the recipients, whether a separate conversation between the user and the recipient exists; if the separate conversation between the user and the recipient exists, step S34 is to be performed; and if the separate conversation between the user and the recipient does not exist, the process ends.

In step S34, the mass message is displayed in a page of the separate conversation between the user and the recipient according to the sending time.

In the page of the separate conversation, the messages sent from and received by the user are displayed in time sequence, and when the mass message is displayed in the page of the separate conversation, the mass message needs to be inserted into an accurate location in the page of the separate conversation according to the sending time of the mass message, that is, the mass message will be inserted into a location that satisfies the time sequence.

In detail, the method for displaying the mass message in the page of the separate conversation may be as follows: the mass message is divided into messages for each of the recipients, and the divided message is copied to the separate conversation between the user and each of the recipients, and is displayed in the page of the separate conversation.

This specific embodiment adds the step of determining, for each of the recipients, whether a separate conversation between the user and the recipient exists; the mass message is displayed in a page of the separate conversation only when the separate conversation between the user and the recipient exists. That is to say, the mass message is only displayed in a page of a separate conversation that has already existed between the user and a contact person. For a contact person who does not have a separate conversation with the user, no new separate conversation will be established to display the mass message.

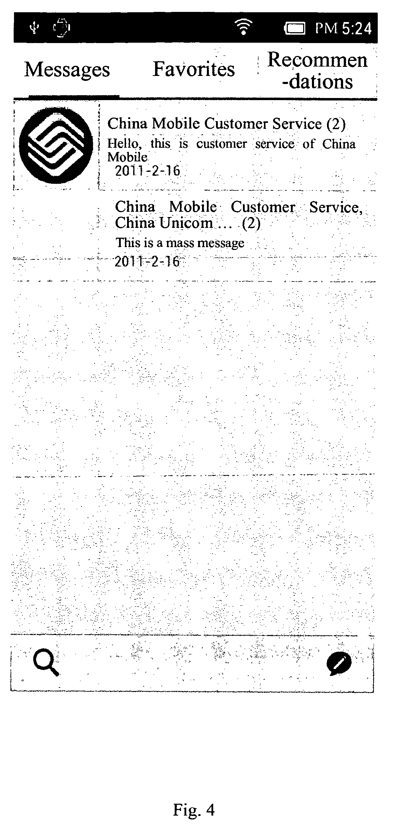

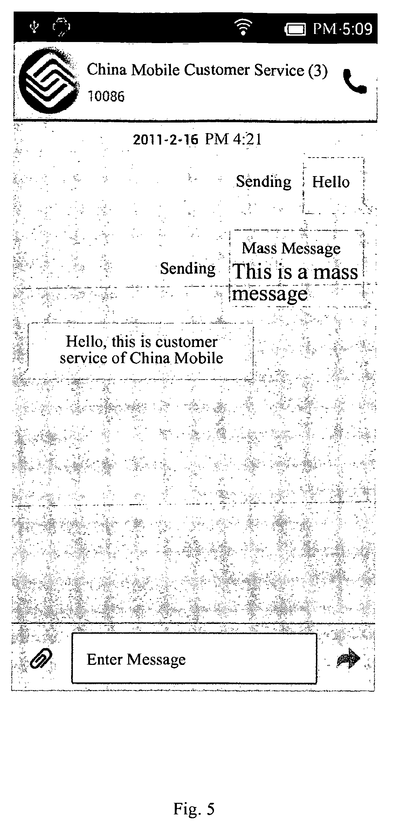

For example, in the short message list shown in Fig. 4, the first conversation is a separate conversation between a user and "China Mobile Customer Service"; the second conversation is a mass message, the content of the mass message is "this is a mass message", and recipients include "China Mobile Customer Service" and "China Unicom Customer Service". After the present embodiment is applied, since a separate conversation exists between the user and "China Mobile Customer Service" in the recipients of the mass message of "this is a mass message", the mass message of "this is a mass message" will be displayed in the page of the first conversation, as shown in Fig. 5; since a separate conversation between the user and "China Unicom" does not exist before, no separate conversation will be newly established between the user and "China Unicom" to display the mass message.

This specific embodiment avoids generating redundant conversations.

In the above embodiment, the mass message is copied into a separate conversation of each of the recipients, in this way, information may be repetitively stored and the space may be wasted. Thus, more preferably, the mass message may be displayed in a page of a separate conversation between the user and a contact person through a link reference. That is to say, there is no need to copy the mass message into a separate conversation of each of the contact persons; instead, the mass message is referred into the separate conversation through the link reference. Thus, information redundancy is avoided, and the space is greatly saved.

If the mass message is displayed in the page of the separate conversation between the user and the contact person through the link reference, then a status of the mass message may be obtained. Thus, further, the status of the mass message may be displayed while the mass message is displayed in the page of the separate conversation. Thereby, the user may directly see the status of the mass message in the separate conversation.

Preferably, the status of the mass message may include "sending", "sent", "read" or "sending failed".

Since the mass message displayed in the page of the separate conversation is reference of a mass message in a mass conversation, an operation (such as a deleting operation) on the mass message displayed in the page of the separate conversation or on the mass message in the mass conversation will influence both of them. Thus, the mass message needs to be highlighted in the page of the separate conversation, so as to prevent the user's misoperation. For example, the referred mass message may be displayed in the page of the separate conversation with a particular font color or background color so as to be distinguished, e.g., the "mass message" marked in Fig.5.

When this method is implemented on a cellphone, since the manner of storing short messages in the cellphone is basically based on a conversation, each conversation may have a conversation ID as an identifier, all content texts of the detailed short messages that belong to the conversation will hang below the conversation ID. Since the mass message does not belong to the separate conversation, a conversation ID of a mass message recording is different from a conversation ID of the separate conversation, and thus the mass message may be found by the method of determining the conversation ID and then may be highlighted. Furthermore, since the conversation ID of the mass message may be recorded, an operation that skips from a current conversation to the mass message may be realized.

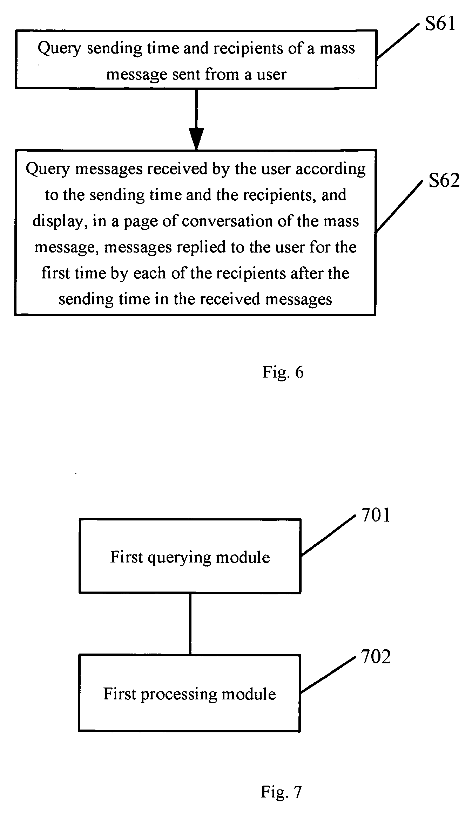

As shown in Fig. 6, a specific embodiment of another method for displaying a message provided by the present disclosure includes the following steps.

In step S61, sending time and recipients of a mass message sent from a user are queried.

In step S62, messages received by the user are queried according to the sending time and the recipients, and messages replied to the user for the first time by each of the recipients after the sending time in the received messages are displayed in a page of conversation of the mass message.

This solution displays the messages sent from the recipients of the mass message in the page of conversation of the mass message, thereby the solution may also realize associating the mass message with separate conversations, such that the user may clearly see reply situations of all the recipients of a mass message.

Correspondingly, the present disclosure provides a device for displaying a message. As shown in Fig. 7, the device includes:
a first querying module 701 configured to query sending time and recipients of a mass message sent from a user; and
a first processing module 702 configured to display the mass message in a page of a separate conversation between the user and each of the recipients according to the sending time.

The first processing module 702 is further configured to determine, for each of the recipients, whether a separate conversation between the user and the recipient exists; if the separate conversation between the user and the recipient exists, to display the mass message in a page of the separate conversation between the user and the recipient according to the sending time.

The first processing module 702 is configured to display the mass message in the page of the separate conversation between the user and the recipient through a link reference.

The first processing module 702 is further configured to display a status of the mass message in the page of the separate conversation between the user and the recipient.

The status may include "sending", "sent", "read" or "sending failed".

The first processing module 702 is further configured to highlight the mass message in the page of the separate conversation between the user and the recipient.

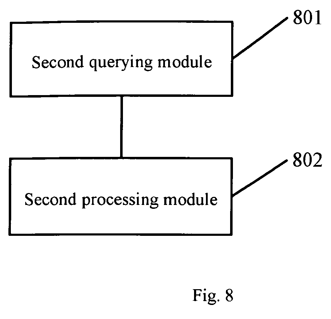

As shown in Fig. 8, a device for displaying a message includes:
a second querying module 801 configured to query sending time and recipients of a mass message sent from a user; and
a second processing module 802 configured to query messages received by the user according to the sending time and the recipients, and display, in a page of conversation of the mass message, messages replied to the user for the first time by each of the recipients after the sending time in the received messages.

It should be understood by those skilled in the art that the embodiments of the present invention may be provided as methods, systems or computer program products. Therefore, the present invention may adopt embodiments in forms of hardware only, software only, or a combination of software and hardware. Furthermore, the present invention may adopt forms of computer program products executed on one or more computer usable storage media (including but not being limited to disk storage and optical storage, etc.) containing computer usable program codes.

The present invention is described with reference to the method, the device (system) and the flowchart and/or a block diagram of a computer program product according to the embodiments of the present invention. It should be understood that each process and/or block in the flowcharts and/or block diagrams, and combinations of processes and/or blocks in the flowcharts and/or block diagrams, may be realized by computer program instructions. These computer program instructions may be provided to a general-purpose computer, a special-purpose computer, an embedded processor, or processors of other programmable data processing devices, to create a machine, such that a device for realizing functions designated in one or more processes in the flowcharts and/or in one or more blocks in the block diagrams, may be created by instructions executed by a computer or processors of other programmable data processing devices.

These computer program instructions may further be stored in a computer readable storage that can boot a computer or other programmable data processing devices to work in a specific way, such that a manufactured goods comprising an instruction device may be created by the instructions stored in the computer readable storage, and the instruction device realizes the functions designated in one or more processes in the flowcharts and/or in one or more blocks in the block diagrams.

These computer program instructions may further be loaded into a computer or other programmable data processing devices, such that a series of operating steps may be performed on the computer or other programmable data processing devices, so as to generate processes realized by the computer, such that steps for realizing the functions designated in one or more processes in the flowcharts and/or in one or more blocks in the block diagrams may be provided by the instructions executed on the computer or other programmable data processing devices.

Apparently, those skilled in the art may make various changes and modifications to the present invention without departing from the scope of the present invention.

## Claims

1. A method for displaying a message thread on a user's mobile phone device, the message thread comprising messages in separate one to one conversations between the user and other recipient users or contact persons, and mass messages in one to many conversations between the users, the message thread being displayed in a conversation page,
**characterized in that**, the method comprises:
querying (S21,S32,S61) sending time and recipients of a mass message sent (S31) from the user; and
inserting the mass message in the conversation page of separate conversations between the user and each of the recipients according to the sending time,
wherein the mass message is inserted into a conversation of a single contact person according to the recipients and the sending time of the mass message, or reply messages of the mass message are displayed in the conversation page of the mass message, thus the mass message is associated with the separate conversations, such that the user may see in the separate conversations the mass message that is displayed (S22,S34) at an accurate location in the message thread.

2. The method according to claim 1, wherein, the step of inserting the mass message in the conversation page of separate conversations between the user and each of the recipients according to the sending time comprises:
determining (S33), for each of the recipients, whether a separate conversation between the user and the recipient exists; if a separate conversation between the user and the recipient exists, inserting the mass message in the conversation page of the separate conversation between the user and the recipient according to the sending time.

3. The method according to claim 1 or 2, wherein, the mass message is displayed (S22,S34) in the conversation page of separate conversations between the user and each of the recipients through a link reference.

4. The method according to claim 3, wherein, the method further comprises:
displaying a status of the mass message in the conversation page of separate conversations between the user and each of the recipients.

5. The method according to claim 4, wherein, the status of the mass message comprises "sending", "sent", "read" or "sending failed".

6. The method according to claim 1, wherein, the method further comprises:
highlighting the mass message in the conversation page of separate conversations between the user and each of the recipients.

7. The method according to claim 1, wherein, the method further comprises:
querying (S62) messages received by the user according to the sending time and the recipients, and inserting comprises, displaying in a conversation page of the mass message, messages replied to the user for the first time by each of the recipients after the sending time in the received messages.

8. A mobile phone device for displaying a message thread, the message thread comprising messages in separate one to one conversations between a user and other recipient users or contact persons, and mass messages in one to many conversations between the users, the message thread being displayed in a conversation page,
**characterized in that**, the device comprises:
a first querying module (701) configured to query (S21,S32,S61) sending time and recipients of a mass message sent (S31) from the user; and
a first processing module (702) configured to insert the mass message in the conversation page of separate conversations between the user and each of the recipients according to the sending time,
wherein the mass message is inserted into a conversation of a single contact person according to the recipients and the sending time of the mass message, or reply messages of the mass message are displayed in the conversation page of the mass message, thus the mass message is associated with the separate conversations, such that the user may see in the separate conversations the mass message that is displayed (S22,S34) at an accurate location in the message thread.

9. The device according to claim 8, wherein, the first processing module (702) is further configured to determine (S33), for each of the recipients, whether a separate conversation between the user and the recipient exists; if the separate conversation between the user and the recipient exists, to insert the mass message in a page of the separate conversation between the user and the recipient according to the sending time.

10. The device according to claim 8 or 9, wherein, the first processing module (702) is configured to display (S22,S34) in the conversation page of separate conversations between the user and each of the recipients through a link reference.

11. The device according to claim 10, wherein, the first processing module (702) is further configured to display (S22,S34) a status of the mass message in the conversation page of separate conversations between the user and each of the recipients.

12. The device according to claim 11, wherein, the status of the mass message comprises "sending", "sent", "read" or "sending failed".

13. The device according to claim 8, wherein, the first processing module (702) is further configured to highlight the mass message in the conversation page of separate conversations between the user and each of the recipients.

14. The device according to claim 8, wherein the device further comprises:
a second processing module (802) configured to query (S62) messages received by the user according to the sending time and the recipients, and inserting comprises, displaying in a conversation page of the mass message, messages replied to the user for the first time by each of the recipients after the sending time in the received messages.

15. A computer program which, when being executed on a processor of a device, performs a method according to any one of claims 1 to 7.

## Patentansprüche

1. Ein Verfahren zum Anzeigen eines Nachrichten-Thread auf einer Mobiltelefonvorrichtung eines Benutzers, wobei der Nachrichten-Thread Nachrichten in separaten Eins-zu-Eins-Konversationen zwischen dem Benutzer und anderen empfangenden Benutzern oder Kontaktpersonen, und Massennachrichten in Eins-zu-Vielen-Konversationen zwischen den Benutzern umfasst, wobei der Nachrichten-Thread in einer Konversationsseite angezeigt wird,
**dadurch gekennzeichnet, dass** das Verfahren umfasst:
Abfragen (S21, S32, S61) von einer Sendezeit und Empfängern einer Massennachricht, die von dem Benutzer gesendet (S31) ist; und
Einfügen der Massennachricht in die Konversationsseite von separaten Konversationen zwischen dem Benutzer und jedem der Empfänger entsprechend der Sendezeit,
wobei die Massennachricht entsprechend den Empfängern und der Sendezeit der Massennachricht in eine Konversation einer einzelnen Kontaktperson eingefügt wird, oder Antwortnachrichten der Massennachricht in der Konversationsseite der Massennachricht angezeigt werden, wobei folglich die Massennachricht mit den separaten Konversationen so in Zusammenhang steht, dass der Benutzer in separaten Konversationen die Massennachricht sehen kann, die an einem genauen Ort in dem Nachrichten-Thread angezeigt (S22, S34) wird.

2. Das Verfahren nach Anspruch 1, wobei der Schritt des Einfügens der Massennachricht in die Konversationsseite von separaten Konversationen zwischen dem Benutzer und jedem der Empfänger entsprechend der Sendezeit umfasst:
Bestimmen (S33) für jeden der Empfänger, ob eine separate Konversation zwischen dem Benutzer und dem Empfänger existiert; und, wenn eine separate Konversation zwischen dem Benutzer und dem Empfänger existiert, Einfügen der Massennachricht in die Konversationsseite der separaten Konversation zwischen dem Benutzer und dem Empfänger entsprechend der Sendezeit.

3. Das Verfahren nach Anspruch 1 oder 2, wobei die Massennachricht in der Konversationsseite von separaten Konversationen zwischen dem Benutzer und jedem der Empfänger durch eine Link-Referenz angezeigt (S22, S34) wird.

4. Das Verfahren nach Anspruch 3, wobei das Verfahren weiterhin umfasst:
Anzeigen eines Status der Massennachricht in der Konversationsseite von separaten Konversationen zwischen dem Benutzer und jedem der Empfänger.

5. Das Verfahren nach Anspruch 4, wobei der Status der Massennachricht "senden", "gesendet", "gelesen" oder "senden fehlgeschlagen" umfasst.

6. Das Verfahren nach Anspruch 1, wobei das Verfahren weiterhin umfasst:
Hervorheben der Massennachricht in der Konversationsseite von separaten Konversationen zwischen dem Benutzer und jedem der Empfänger.

7. Das Verfahren nach Anspruch 1, wobei das Verfahren weiterhin umfasst:
Abfragen (S62) von durch den Benutzer entsprechend der Sendezeit und der Empfänger empfangenen Nachrichten, und wobei das Einfügen ein Anzeigen von Nachrichten, mit denen dem Benutzer zum ersten Mal durch jeden der Empfänger nach der Sendezeit geantwortet ist, in den empfangenen Nachrichten in einer Konversationsseite der Massennachricht.

8. Eine Mobiltelefonvorrichtung zum Anzeigen eines Nachrichten-Thread, wobei der Nachrichten-Thread Nachrichten in separaten Eins-zu-Eins-Konversationen zwischen einem Benutzer und anderen empfangenden Benutzern oder Kontaktpersonen, und Massennachrichten in Eins-zu-Vielen-Konversationen zwischen den Benutzern umfasst, wobei der Nachrichten-Thread in einer Konversationsseite angezeigt ist,
**dadurch gekennzeichnet, dass** die Vorrichtung umfasst:
ein erstes Abfrage-Modul (701), das eingerichtet ist, eine Sendezeit und Empfänger einer Massennachricht, die von dem Benutzer gesendet (S31) ist, abzufragen (S21, S32, S61); und
ein erstes Verarbeitungsmodul (702), das eingerichtet ist, die Massennachricht entsprechend der Sendezeit in die Konversationsseite von separaten Konversationen zwischen dem Benutzer und jedem der Empfänger einzufügen,
wobei die Massennachricht entsprechend den Empfängern und der Sendezeit der Massennachricht in eine Konversation einer einzelnen Kontaktperson eingefügt ist, oder Antwortnachrichten der Massennachricht in der Konversationsseite der Massennachricht angezeigt sind, wobei folglich die Massennachricht mit den separaten Konversationen derart in Zusammenhang steht, dass der Benutzer in separaten Konversationen die Massennachricht sehen kann, die an einem genauen Ort in dem Nachrichten-Thread angezeigt (S22, S34) ist.

9. Die Vorrichtung nach Anspruch 8, wobei das erste Verarbeitungsmodul (702) weiterhin eingerichtet ist, um für jeden der Empfänger zu bestimmen (S33), ob eine separate Konversation zwischen dem Benutzer und dem Empfänger existiert; und, wenn die separate Konversation zwischen dem Benutzer und dem Empfänger existiert, die Massennachricht entsprechend der Sendezeit in eine Seite der separaten Konversation zwischen dem Benutzer und dem Empfänger einzufügen.

10. Die Vorrichtung nach Anspruch 8 oder 9, wobei das erste Verarbeitungsmodul (702) eingerichtet ist, um in der Konversationsseite von separaten Konversationen zwischen dem Benutzer und jedem der Empfänger durch eine Link-Referenz anzuzeigen (S22, S34).

11. Die Vorrichtung nach Anspruch 10, wobei das erste Verarbeitungsmodul (702) weiterhin eingerichtet ist, um einen Status der Massennachricht in der Konversationsseite von separaten Konversationen zwischen dem Benutzer und jedem der Empfänger anzuzeigen (S22, S34).

12. Die Vorrichtung nach Anspruch 11, wobei der Status der Massennachricht "senden", "gesendet", "gelesen" oder "senden fehlgeschlagen" umfasst.

13. Die Vorrichtung nach Anspruch 8, wobei das erste Verarbeitungsmodul (702) weiterhin eingerichtet ist, um die Massennachricht in der Konversationsseite von separaten Konversationen zwischen dem Benutzer und jedem der Empfänger hervorzuheben.

14. Die Vorrichtung nach Anspruch 8, wobei die Vorrichtung weiterhin umfasst:
ein zweites Verarbeitungsmodul (802), dass eingerichtet ist, um von dem Benutzer entsprechend der Sendezeit und der Empfänger empfangene Nachrichten abzufragen (S62), und wobei das Einfügen ein Anzeigen von Nachrichten, mit denen dem Benutzer zum ersten Mal durch jeden der Empfänger nach der Sendezeit geantwortet ist, in den empfangenen Nachrichten in einer Konversationsseite der Massennachricht umfasst.

15. Ein Computerprogramm, das, wenn es auf einem Prozessor einer Vorrichtung ausgeführt wird, ein Verfahren nach irgendeinem der Ansprüche 1 bis 7 ausführt.

## Revendications

1. Procédé pour afficher un fil de messages sur un dispositif de téléphone mobile d'un utilisateur, le fil de messages comprenant des messages dans des conversations un à un séparées entre l'utilisateur et d'autres utilisateurs destinataires ou personnes de contact, et des messages de masse dans une ou plusieurs conversations entre les utilisateurs, le fil de messages étant affiché dans une page de conversation,
**caractérisé en ce que**, le procédé comprend :
l'interrogation (S21, S32, S61) d'une heure d'envoi et de destinataires d'un message de masse envoyé (S31) depuis l'utilisateur ; et
l'insertion du message de masse dans la page de conversation de conversations séparées entre l'utilisateur et chacun des destinataires selon l'heure d'envoi,
dans lequel le message de masse est inséré dans une conversation d'une seule personne de contact selon les destinataires et l'heure d'envoi du message de masse, ou des messages de réponse du message de masse sont affichés dans la page de conversation du message de masse, ainsi le message de masse est associé aux conversations séparées, de sorte que l'utilisateur puisse voir dans les conversations séparées le message de masse qui est affiché (S22, S34) à un emplacement précis dans le fil de messages.

2. Procédé selon la revendication 1, dans lequel, l'étape d'insertion du message de masse dans la page de conversation de conversations séparées entre l'utilisateur et chacun des destinataires selon l'heure d'envoi comprend :
la détermination (S33), pour chacun des destinataires, si une conversation séparée entre l'utilisateur et le destinataire existe ; si la conversation séparée entre l'utilisateur et le destinataire existe, l'insertion du message de masse dans la page de conversation de la conversation séparée entre l'utilisateur et le destinataire selon l'heure d'envoi.

3. Procédé selon la revendication 1 ou 2, dans lequel le message de masse est affiché (S22, S34) dans la page de conversation de conversations séparées entre l'utilisateur et chacun des destinataires par l'intermédiaire d'une référence de lien.

4. Procédé selon la revendication 1, dans lequel le procédé comprend en outre :
l'affichage d'un statut du message de masse dans la page de conversation de conversations séparées entre l'utilisateur et chacun des destinataires.

5. Procédé selon la revendication 4, dans lequel le statut du message de masse comprend « envoi », « envoyé », « lu » ou « échec d'envoi ».

6. Procédé selon la revendication 1, dans lequel le procédé comprend en outre :
la mise en évidence du message de masse dans la page de conversation de conversations séparées entre l'utilisateur et chacun des destinataires.

7. Procédé selon la revendication 1, dans lequel le procédé comprend en outre :
l'interrogation (S62) de messages reçus par l'utilisateur selon l'heure d'envoi et les destinataires, et l'insertion comprend l'affichage, dans une page de conversation du message de masse, de messages répondus à l'utilisateur pour la première fois par chacun des destinataires après l'heure d'envoi dans les messages reçus.

8. Dispositif de téléphone mobile pour afficher un fil de messages, le fil de messages comprenant des messages dans des conversations un à un séparées entre un utilisateur et d'autres utilisateurs destinataires ou personnes de contact, et des messages de masse dans une à plusieurs conversations entre les utilisateurs, le fil de messages étant affiché dans une page de conversation,
**caractérisé en ce que**, le dispositif comprend :
un premier module d'interrogation (701) configuré pour interroger (S21, S32, S61) une heure d'envoi et des destinataires d'un message de masse envoyé (S31) depuis l'utilisateur ; et
un premier module de traitement (702) configuré pour insérer le message de masse dans la page de conversation de conversations séparées entre l'utilisateur et chacun des destinataires selon l'heure d'envoi,
dans lequel le message de masse est inséré dans une conversation d'une seule personne de contact selon les destinataires et l'heure d'envoi du message de masse, ou des messages de réponse du message de masse sont affichés dans la page de conversation du message de masse, ainsi le message de masse est associé aux conversations séparées, de sorte que l'utilisateur puisse voir dans les conversations séparées le message de masse qui est affiché (S22, S34) à un emplacement précis dans le fil de messages.

9. Dispositif selon la revendication 8, dans lequel le premier module de traitement (702) est en outre configuré pour déterminer (S33), pour chacun des destinataires, si une conversation séparée entre l'utilisateur et le destinataire existe ; si la conversation séparée entre l'utilisateur et le destinataire existe, pour insérer le message de masse dans une page de la conversation séparée entre l'utilisateur et le destinataire selon l'heure d'envoi.

10. Dispositif selon la revendication 8 ou 9, dans lequel le premier module de traitement (702) est configuré pour afficher (S22, S34) dans la page de conversation de conversations séparées entre l'utilisateur et chacun des destinataires par l'intermédiaire d'une référence de lien.

11. Dispositif selon la revendication 10, dans lequel le premier module de traitement (702) est en outre configuré pour afficher (S22, S34) un statut du message de masse dans la page de conversation de conversations séparées entre l'utilisateur et chacun des destinataires.

12. Dispositif selon la revendication 11, dans lequel le statut du message de masse comprend « envoi », « envoyé », « lu » ou « échec d'envoi ».

13. Dispositif selon la revendication 8, dans lequel, le premier module de traitement (702) est en outre configuré pour mettre en évidence le message de masse dans la page de conversation de conversations séparées entre l'utilisateur et chacun des destinataires.

14. Dispositif selon la revendication 8, dans lequel le dispositif comprend en outre :
un second module de traitement (802) configuré pour interroger (S62) des messages reçus par l'utilisateur selon l'heure d'envoi et les destinataires, et l'insertion comprend l'affichage, dans une page de conversation du message de masse, de messages répondus à l'utilisateur pour la première fois par chacun des destinataires après l'heure d'envoi dans les messages reçus.

15. Programme informatique qui, lorsqu'il est exécuté sur un processeur d'un dispositif, effectue un procédé selon l'une quelconque des revendications 1 à 7.
